# EUROPEAN PATENT SPECIFICATION

(11) **EP 4 008 880 B1**
(45) Date of publication and mention of the grant of the patent: **20.09.2023**
(21) Application number: 20210928.6
(22) Date of filing: 01.12.2020
(51) Int. Cl.: E02F 3/28, E02F 3/36, E21C 25/00

(54) **ROTATION APPARATUS FOR BOOM OF MINING VEHICLE AND MINING VEHICLE**
ROTATIONSVORRICHTUNG FÜR AUSLEGER VON BERGBAUFAHRZEUGEN UND BERGBAUFAHRZEUG
APPAREIL DE ROTATION DE BRAS DE VÉHICULE MINIER ET VÉHICULE MINIER

(43) Date of publication of application: 08.06.2022
(73) Proprietor: Sandvik Mining and Construction Oy, 33330 Tampere (FI)
(72) Inventor: MAKSIMAINEN, Jussi, 33720 Tampere (FI); PIIPPONEN, Juha, 33311 Tampere (FI); LAUNIS, Sirpa, 33311 Tampere (FI); ANTTONEN, Pekka, 33311 Tampere (FI); JÄRKKÄLÄ, Juho, 33311 Tampere (FI); KALLINEN, Risto, 37120 Nokia (FI); CONNELLY, Stephen, 33230 Tampere (FI); ERONEN, Kimmo, 33960 Pirkkala (FI)
(74) Representative: Sandvik

(56) References cited:
- EP-A1- 3 235 957
- WO-A1-2017/071982
- WO-A2-2008/032280
- KR-A- 20190 137 504
- US-A- 5 071 310
- US-A1- 2019 178 082

## Description

### TECHNICAL FIELD

The present invention relates to rotating apparatuses for booms of mining vehicles.

### BACKGROUND OF THE ART

In mines and other working sites, the mining apparatuses and vehicles are exposed to harsh environmental conditions like falling objects. The vehicles and apparatuses comprise a movable arm, e.g. a boom, which is connected to a rotation unit comprising a feed beam with a working tool, e.g. rock drilling machine, reinforcement device, measurement device or hydraulic breaker. Patent publication EP 3235957 A1 discloses an example of such a vehicle, namely an excavator with an arm having a rotation device. The working tools are typically hydraulic devices which need to be furnished with hydraulic fluid and in some cases with flushing medium and pressurized air. The hydraulic fluids and other mediums are conducted from the vehicle to the working tool via conduits, e.g. service lines, hydraulic hoses etc. The conduits are routed outside the boom structures and they are, thus, exposed to the environment, e.g. falling rocks. The service lines hang loose outside the boom structure and therefore they may even entangle themselves. The external service lines are also prone to break down and there is potential of high-pressure fluid release and environmental contamination. Repair and maintenance of the broken service lines takes time and, while the apparatus is repaired, the apparatus is out of work, which costs. Further, cables routed outside reduce visibility of the operator.

### OBJECTIVE OF THE INVENTION

The objective of the apparatus is to alleviate the disadvantages mentioned above.

In particular, the apparatus is to provide more safe service line structure within a rotation apparatus.

### SUMMARY

According to a first aspect, the present invention provides a rotation apparatus for a boom of a mining vehicle according to the features specified in claim 1.

According to the apparatus, it comprises a rotation device having an axial central axis. The rotation device comprises a housing, an inner manifold having a tube-like structure with a space within, wherein the inner manifold is arranged concentrically inside the housing. The housing is arranged to rotate around the axial central axis and the housing comprises a housing channel, the inner manifold comprises a fluid channel having a fluid inlet for receiving fluid from the boom. The fluid channel is connected to the housing channel for forming a fluid conduit through the rotation device. Electric cables are routed through the rotation device at axial central axis.

The advantage of the apparatus is that fluid conduits may be enclosed within the rotation apparatus, which reduces maintenance downtime and potential for damage for exposed hose lines may be avoided. Risk for fluid lines being impacted by falling object, such as rocks, is significantly reduced. Further, potential for environmental contamination is reduces, as there is less potential of high-pressure fluid release. Also, visibility of the controller may be improved as there are less or zero external hoses. As electric cables are routed through each rotation device at axial central axis, they are provided safely inside the apparatus structure and, thus, they are not exposed to the environment. A further advantage is that both hydraulic fluid conduits and electric cables can be safely routed through the same rotation device without interfering with each other.

In an embodiment of the apparatus, the apparatus comprises two rotation devices, a first rotation device and the second rotation device, wherein the second rotation device is connected to the first rotation device so that the axial central axis of the second rotation device is perpendicular to the axial central axis of the first rotation device. The housing channel of the first rotation device is connected to the fluid channel of the second rotation device, and the fluid channel of the second rotation device is connected to the housing channel of the second rotation device, whereby the formed fluid conduit is extending through the first and second rotation devices. In the second rotation device, the housing is arranged to rotate in relation to the inner manifold of the second rotation device around its axial central axis. The advantage is that a second degree of freedom in movement may be provided.

In an embodiment of the apparatus, the apparatus comprises a third rotation device, wherein the third rotation device is connected to the second rotation device so that the axial central axis of the third rotation device is perpendicular to the axial central axis of the second rotation device. The housing channel of the second rotation device is connected to the housing channel of the third rotation device, and the housing channel of the third rotation device is connected to the fluid channel of the third rotation device, whereby the formed fluid conduit is extending through the first, second and third rotation units. In the third rotation device, the inner manifold is arranged to rotate in relation to the housing of the third rotation device around its axial central axis. The advantage is that a third degree of freedom in movement may be provided.

In an embodiment of the apparatus, the housing channel comprises at least one annular ring provided at inner surface of the housing. The advantage is that the fluid may be provided between the fluid channel and the housing channel while the inner manifold and the housing are in rotational movement in respect to each other.

In an embodiment of the apparatus, the housing channel comprises an axial section extending axially within the housing structure.

In an embodiment of the apparatus, the fluid channel comprises an axial section extending axially within the inner manifold structure.

In an embodiment of the apparatus, the fluid channel comprises a fluid channel outlet connected to the annular ring of the housing channel.

In an embodiment of the apparatus, the apparatus comprises plurality of fluid conduits formed by plurality of housing channels and fluid channels connected to each other. The advantage is that several fluid conduits providing different fluids may be provided.

In an embodiment of the apparatus, the space encloses drive units. The advantage is that the drive units may be provided safely inside the apparatus structure and, thus, they are not exposed to the environment.

In an embodiment of the apparatus, each rotation device is arranged to rotate 180° around its axial central axis.

According to a first aspect, the present invention provides a mining vehicle is provided comprising a rotation apparatus according the invention.

It is to be understood that the aspects and embodiments of the invention described above may be used in any combination with each other. Several of the aspects and embodiments may be combined together to form a further embodiment of the invention.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** shows an overview of a movable arm of a mining vehicle, such as a drilling rig used in mines or construction sites, wherein a rotation apparatus is connected,
**Fig. 2** shows a side view of the rotation apparatus having three rotation devices,
**Figs. 3 and 4** show sectional views of the rotation apparatus having three rotation devices as in fig 2,
**Fig. 5** shows a sectional view in longitudinal direction of an embodiment of one rotation device,
**Fig. 6** shows an end plate of the rotation device,
**Fig. 7** shows an embodiment where the rotation apparatus comprises three rotation devices, first rotation device, second rotation device and third rotation device 23.

### DETAILED DESCRIPTION

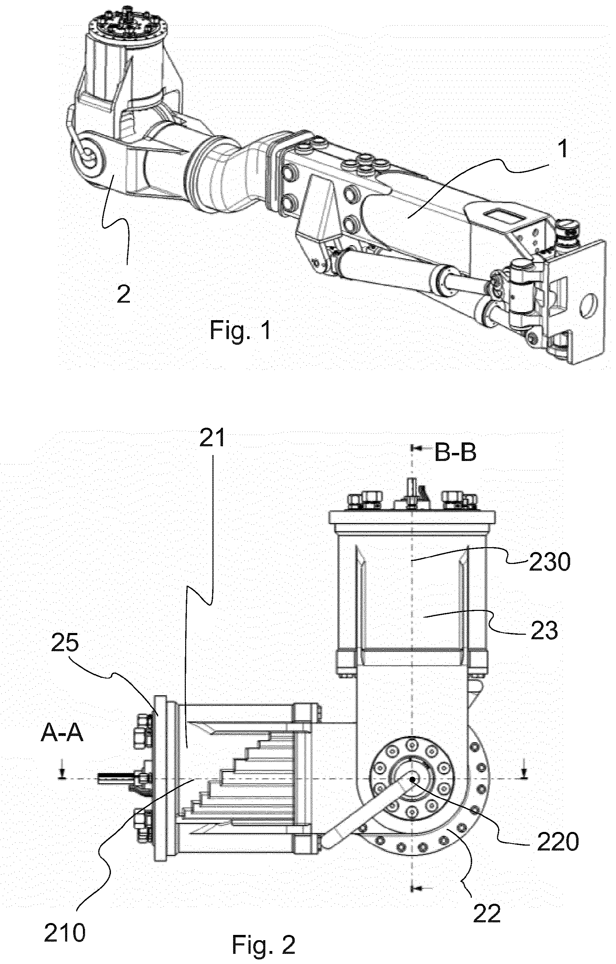

Figure 1 shows an overview of a movable arm 1 of a mining vehicle, such as a drilling rig used in mines or construction sites, wherein a rotation apparatus 2 is connected. The movable arm 1 may be an extendable boom or non-extendable boom. The rotation apparatus 2 provides rotational movement at the end of the boom and provides flexible movement and use of a working tool connected to the rotation apparatus 2.

The rotation apparatus 2 comprises at least one rotation device 21, having an axial central axis, and providing rotation movement around the axial central axis. The rotation apparatus may comprise two or more rotation devices connected one after another, wherein each individual rotation device provides on degree of freedom. The rotation device may be arranged to rotate 180 degrees around its axial central axis. In an embodiment where the rotation apparatus rotation apparatus comprises two rotation devices, the second rotation device is connected to the first rotation device so that the axial central axis of the second rotation device is perpendicular to the axial central axis of the first rotation device. By having three individual rotation devices, the rotation apparatus may provide 3-axis of rotational movement at the end of the boom.

The rotation device comprises a housing, which forms the outer layer of the rotation device, and an inner manifold, which is arranged concentrically inside the housing. Either the housing or the inner manifold is arranged to rotate around the axial central axis of the rotation device and in respect to the other. The rotation device may be provided with bearings arranged between the housing and the inner manifold in order to achieve the rotational movement in relation to each other. The bearings may comprise slide bearings and/or ball bearings.

The inner manifold has a tube-like structure with a space within. The space may be used for enclosing components of the rotation device, e.g. drive units such as motor, brake and gearbox. The inner manifold comprises at least one fluid channel having a fluid inlet for receiving fluid from the boom. The fluid channel may be arranged in longitudinal direction, i.e. having an axial section parallel to the axial central axis, inside the inner manifold wall structure. The inner manifold may also comprise two or more fluid channels running in longitudinal direction.

The housing comprises at least one housing channel for conducting the fluid through the housing structure. The housing channel may be provided inside the housing structure or the housing channel may be provided as a tube or pipe on the outer surface of the housing. The housing channel may be arranged in longitudinal direction, i.e. having an axial section parallel to the axial central axis. One end of the housing channel is connected to the fluid channel of the inner manifold and the other end to the working tool or to another rotation device if such is used for forming a fluid conduit through the rotation device. The housing may also comprise two or more housing channels.

In an embodiment, the number of housing channels correspond the number of fluid channels and each housing channel is connected to one fluid channel, whereby several fluid conduits through the rotation device are formed.

The housing may comprise annular ring, or rings if the inner manifold comprises several fluid channels and the housing channel comprises several housing channels, provided as a groove (or grooves) on the inner surface of the housing at a distant from each other in axial direction. Each annular ring may be connected to housing channel, whereby the fluid from the fluid channel of the inner manifold may be conducted to the housing channel during the rotational movement of inner manifold or the housing. Each annular ring may be connected to the same housing channel or separate housing channels.

Figure 2 shows a side view of the rotation apparatus having three rotation devices. Each of the rotation devices 21, 22 and 23 has an imaginary axial central axis 210, 220 and 230 extending in longitudinal direction of corresponding rotation device. In figure 2, the rotation devices 21, 22 and 23 are positioned so that the axial central axis 220 of the first rotation device 21 is extending in horizontal direction, the axial central axis 220 of the second rotation device 22 is seen only as a point, and the axial central axis 230 of the third rotation device 23 is extending in vertical direction. The rotation device 21 may comprise an end plate 25 through which the service lines, such as fluid channels are routed from the boom into the rotation device 21 and the rotation apparatus.

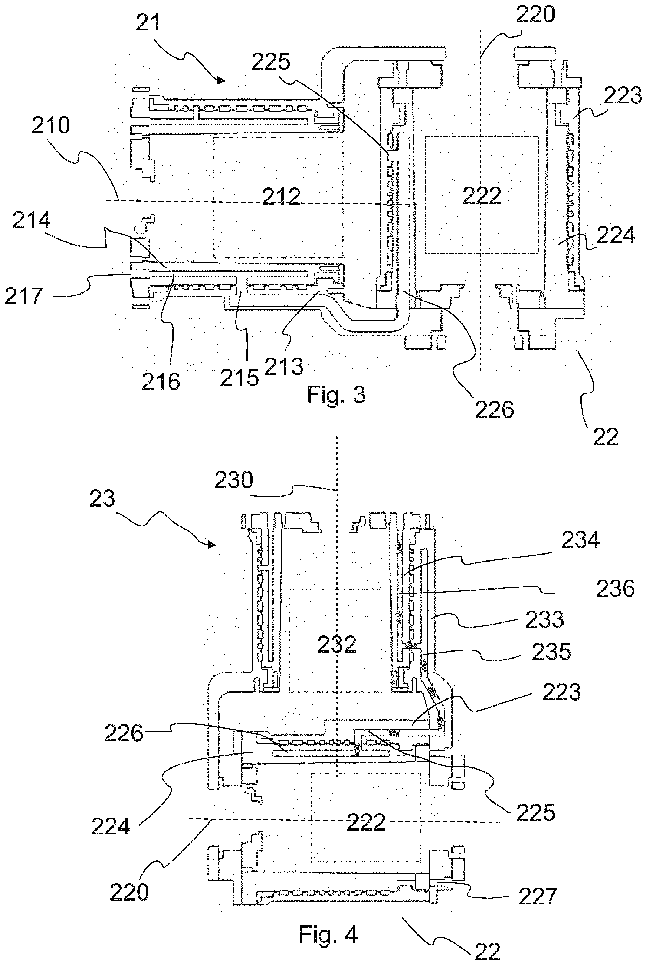

Figures 3 and 4 shows sectional views of the rotation apparatus having three rotation devices as in figure 2.

Figure 3 shows a sectional view of the first rotation device 21 and the second rotation device 22 through the plane A-A (seen in figure 2). The first rotation device 21 comprises a housing 213 and an inner manifold 214 arranged concentrically inside the housing 213, wherein the housing 213 is arranged to rotate around the axial central axis 210. The housing 213 is connected to the second rotation device 22 and, thus, the second rotation device 22 is rotating with the housing 213 around the axial central axis 210.

The inner manifold 214 comprises a fluid channel 216, which is extending inside the inner manifold structure in axial direction, i.e. parallel to the axial central axis 210. The fluid channel comprises a fluid inlet 217 for receiving fluid from the boom in which the rotation apparatus is attached.

The housing 213 comprises a housing channel 215 arranged inside the housing structure. As noted, the housing channel may also be arranged as a pipe or a tube on the outer surface of the housing 213.

The fluid channel 216 is connected to the housing channel 215, whereby the fluid channel and the housing channel forms a fluid conduit through the rotation device. The first rotation device may comprise several said fluid conduits formed by several fluid channels 216 and housing channels 215.

The second rotation device 22 comprises similar structure as the first rotation device 21. In the second rotation device 22, the inner manifold does not rotate in relation to the second rotation device 22 and the housing 213 of the first rotation device 21. In second rotation device 22, the housing 223 is arranged to rotate around the axial central axis 220 of the second rotation device 22.

The housing channel 215 of the first rotation device 21 is connected to the fluid channel 226 of the second rotation device 22 for providing fluid from the first rotation device 21 to the second rotation device 22. The fluid is further conducted from the fluid channel 226 of the second rotation device 22 to the housing channel of the second rotation device 22 to form a fluid conduit through the second rotation device 22.

Similar to the first rotation device 21, the housing 223 of the second rotation device 22 may also comprise annular ring or rings on the inner surface of the housing 223 for providing the fluid connection between the fluid channel 226 and the housing channel while the housing 223 is rotating in relation to the inner manifold 224. Also, the second rotation device 22 may comprise several individual fluid conduits formed by several fluid channels and housing channels. Each annular ring may be connected to the same housing channel or separate housing channels.

The inner manifold 214 of the first rotation device 21 and the inner manifold 224 of the second rotation device 22 have a tube-like structure with a space 212, 222 within. The space may enclose components of the rotation device as described above.

Figure 4 shows a sectional view of the second rotation device 22 and the third rotation device 23 through the plane B-B (seen in figure 2). The third rotation device 23 comprises similar structure as the first rotation device 21 and the second rotation device 22. The third rotation device 23 comprises a housing 233 and an inner manifold 234 arranged concentrically inside the housing 233, wherein the inner manifold 234 is arranged to rotate around the axial central axis 230 of the third rotation device 23 and in relation to the housing 233. The housing 233 is connected to the second rotation device 22 and, thus, the housing 233 of the third rotation device 23 is not rotating in relation to the housing 223 of the second rotation device 22 and around the axial central axis 230.

The inner manifold 234 comprises a fluid channel 236, which is extending inside the inner manifold structure in axial direction, i.e. parallel to the axial central axis 230. The fluid channel 236 is connected to the housing channel 226 of the second rotation device 22 for receiving the fluid from the second rotation device 22. The housing 233 comprises a housing channel 235 arranged inside the housing structure. As noted, the housing channel may also be arranged as a pipe of tube on the outer surface of the housing.

The housing channel 225 of the second rotation device 22 is connected to the housing channel 235 of the third rotation device 23 for providing fluid from the second rotation device 22 to the third rotation device 23. The fluid is further conducted from the housing channel 235 to the fluid channel 236 of the third rotation device 23 to form a fluid conduit through the third rotation device 23. The fluid channel 236 of the third rotation device 23 is further connected to the working tool for providing the fluid to the working tool.

Similar to the first rotation device 21 and the second rotation device 22, the housing 233 of the third rotation device 23 may also comprise annular ring or rings on the inner surface of the housing 233 for providing the fluid connection between the fluid channel 236 and the housing channel 235 while the inner manifold 234 is rotating in relation to the housing 233. Also, the third rotation device 23 may comprise several individual fluid conduits formed by several fluid channels and housing channels.

The inner manifold 234 of the third rotation device 23 also has a tube-like structure with a space 232 within. The space may enclose components of the rotation device as described above.

By providing described fluid conduits formed by the fluid channels 216, 226 and 236 and the housing channels 215, 225 and 235, it is possible to provide a continuous fluid conduit or conduits inside and through each rotation device for providing fluid from the boom, in which the rotation apparatus is connected, to the working tool, attached to the end of the third rotation device.

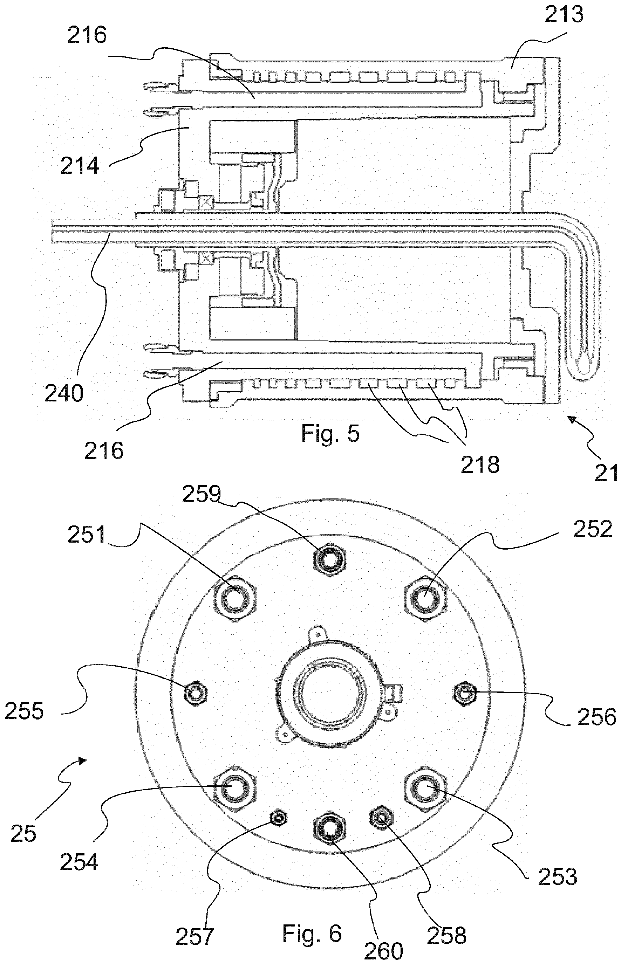

Figure 5 shows a sectional view in longitudinal direction of an embodiment of one rotation device. It should be understood that the shown embodiment may be implemented to any of the rotation devices of the rotation apparatus and to any of previously described embodiments. For the clarity, figure 5 discloses reference numbers of the first rotation device, which have been used earlier. The housing 213 comprises several annular rings 218 provided on the inner surface of the housing 213. The annular rings 218 are provided at a distant from each other in axial direction. The annular rings 218 may be connected to one housing channel or each may be connected to two or more housing channels. Each annular ring 218 is also connected to at least one fluid channel 216 of the inner manifold 214 or each annular ring 218 may be connected to two or more fluid channels 216. The section view in figure 5 shows two fluid channels 216, which are connected to the same annular ring.

As shown in figure 5, the rotation apparatus may comprise electric cables 240 routed through the rotation device 21. The electric cables 240 may be routed inside the inner manifold at the axial central axis of the routing device 21. Thus, the electric cables 240 routing is not exposed to the environment and external impacts. If two or more rotation devices are provided, the electric cables 240 may be routed through each rotation device.

Figure 6 shows an end plate 25 of the rotation device. The service lines, such as the fluid channels, are routed from the boom inside the rotation device through the end plate 25. The end plate may comprise several inlets and outlets for the fluids running through the rotation apparatus. In figure 6, the end plate comprises hydraulic rotation inlet 251, hydraulic rotation outlet 252, hydraulic percussion inlet 253, hydraulic percussion outlet 254, common rail hydraulic inlet 255, common hydraulic outlet 256, lubrication oil 257, lubrication air 258, water flushing 9 and air flushing 260. Each inlets and outlets are connected to separate fluid channels of the inner manifold and further to the annular ring(s) and/or to the housing channel(s). Corresponding end plate may be provided also at the other end of the rotation apparatus, to provide service lines and fluids to the working tool.

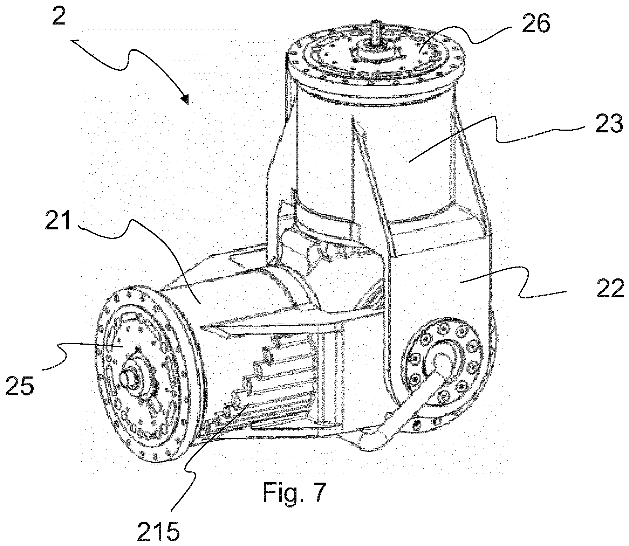

Figure 7 shows an overview of a rotation apparatus 2 comprising three rotation devices 21, 22, 23, each providing one degree of freedom, i.e. providing 3-axis of rotational movement. In figure 7, the housing channels 215 are provided on the outer surface of the housings, but as described above, the housing channels may optionally be provided inside the housing structure, i.e. housing wall. The housing channels 215 are having different lengths as each housing channel 215 are connected to different fluid channels and/or annular rings. Same kind of housing channel arrangement may be provided on each rotation device. The first rotation device 21 comprises an end plate 25 through which the fluids are provided into the rotation apparatus. The third rotation device 23 comprises similar end plate 26 to provide fluids from the rotation apparatus to the working tool.

Figure 7 shows an embodiment where the rotation apparatus 2 comprises three rotation devices, first rotation device 21, second rotation device 22 and third rotation device 23. The third rotation device 23 is connected to the second rotation device 22 so that the axial central axis of the third rotation device 23 is perpendicular to the axial central axis of the second rotation device.

If the apparatus comprises several rotation units, it should be understood that above definitions of one rotation device may be implemented to other rotation devices even if it is not described so in respect to each rotation device.

The present invention falls within the purview of prospective claims.

## Claims

1. A rotation apparatus for a boom (1) of a mining vehicle, the apparatus comprising a rotation device (21) having an axial central axis (210),
**characterized in that**
the rotation device (21) comprises
- a housing (213),
- an inner manifold (214) having a tube-like structure with a space (212) within, wherein the inner manifold (214) is arranged concentrically inside the housing (213), wherein
-- the housing (213) is arranged to rotate around the axial central axis (210),
-- the housing (213) comprises a housing channel (215),
-- the inner manifold (214) comprises a fluid channel (216) having a fluid inlet (217) for receiving fluid from the boom, and
-- the fluid channel (216) is connected to the housing channel (215) for forming a fluid conduit through the rotation device, and
the rotation apparatus further comprises electric cables (240) routed through the rotation device (21), whereby the electric cables (240) are routed through the rotation device (21) at the axial central axis (210) .

2. The rotation apparatus according to claim 1, wherein the apparatus comprises two rotation devices, a first rotation device (21) and the second rotation device (22), wherein
- the second rotation device (22) is connected to the first rotation device (21) so that the axial central axis of the second rotation device (220) is perpendicular to the axial central axis (210) of the first rotation device (21),
- the housing channel (215) of the first rotation device (21) is connected to the fluid channel (226) of the second rotation device (22), and
- the fluid channel (226) of the second rotation device (22) is connected to the housing channel (225) of the second rotation device (22), whereby
the formed fluid conduit is extending through the first and second rotation devices (21, 22), and
- in the second rotation device (22), the housing (223) is arranged to rotate in relation to the inner manifold (224) of the second rotation device (22) around its axial central axis (220).

3. The rotation apparatus according to claim 2, wherein the apparatus comprises a third rotation device (23), wherein
- the third rotation device (23) is connected to the second rotation device (22) so that the axial central axis (230) of the third rotation device (23) is perpendicular to the axial central axis (220) of the second rotation device (22), wherein
- the housing channel (225) of the second rotation device (22) is connected to the housing channel (235) of the third rotation device (23), and
- the housing channel (235) of the third rotation device (23) is connected to the fluid channel (236) of the third rotation device (23), whereby
the formed fluid conduit is extending through the first, second and third rotation units (21, 22, 23), and
- in the third rotation device (23), the inner manifold (234) of the third rotation device (23) is arranged to rotate in relation to the housing (233) around its axial central axis (230).

4. The rotation apparatus according to any one of the preceding claims, wherein the housing channel (215, 225, 235) comprises at least one annular ring (218) provided at inner surface of the housing (213, 223, 233) .

5. The rotation apparatus according to any one of the preceding claims, wherein the housing channel (215, 225, 235) comprises an axial section extending axially within the housing structure (213, 223, 233).

6. The rotation apparatus according to any one of the preceding claims, wherein the fluid channel (216, 226, 236) comprises an axial section extending axially within the inner manifold (214, 224, 234).

7. The rotation apparatus according to any one of the claims 4 to 6, wherein the fluid channel (216, 226, 236) comprises a fluid channel outlet connected to the annular ring (218) of the housing channel (215, 225, 235) .

8. The rotation apparatus according to any one of the preceding claims, wherein the apparatus comprises plurality of fluid conduits formed by plurality of housing channels (215, 225, 235) and fluid channels (216, 226, 236) connected to each other.

9. The rotation apparatus according to any of the preceding claims, wherein the space (212, 222, 232) encloses drive units.

10. The rotation apparatus according to any one of the preceding claims, wherein each rotation device (21, 22, 23) is arranged to rotate 180° around its axial central axis (210, 220, 230).

11. A mining vehicle comprising a rotation apparatus according to any one of the preceding claims.

## Patentansprüche

1. Dreheinrichtung für einen Ausleger (1) eines Bergbaufahrzeugs, wobei die Einrichtung eine Drehvorrichtung (21) umfasst, die eine axiale Mittelachse (210) aufweist,
**dadurch gekennzeichnet, dass**
die Drehvorrichtung (21) umfasst
- ein Gehäuse (213),
- einen Innenverteiler (214), der eine rohrartige Struktur mit einem Raum (212) darin aufweist, wobei der Innenverteiler (214) konzentrisch innerhalb des Gehäuses (213) angeordnet ist, wobei
- das Gehäuse (213) so angeordnet ist, dass es sich um die axiale Mittelachse (210) dreht,
- das Gehäuse (213) einen Gehäusekanal (215) umfasst,
- der Innenverteiler (214) einen Fluidkanal (216) umfasst, der einen Fluideinlass (217) aufweist, um Fluid vom Ausleger aufzunehmen, und
- der Fluidkanal (216) mit dem Gehäusekanal (215) verbunden ist, um eine Fluidleitung durch die Drehvorrichtung zu bilden, und
die Dreheinrichtung weiter durch die Drehvorrichtung (21) geführte Elektrokabel (240) umfasst, wobei die Elektrokabel (240) an der axialen Mittelachse (210) durch die Drehvorrichtung (21) geführt sind.

2. Dreheinrichtung nach Anspruch 1, wobei die Einrichtung zwei Drehvorrichtungen umfasst, eine erste Drehvorrichtung (21) und die zweite Drehvorrichtung (22), wobei
- die zweite Drehvorrichtung (22) mit der ersten Drehvorrichtung (21) so verbunden ist, dass die axiale Mittelachse der zweiten Drehvorrichtung (220) senkrecht zur axialen Mittelachse (210) der ersten Drehvorrichtung (21) steht,
- der Gehäusekanal (215) der ersten Drehvorrichtung (21) mit dem Fluidkanal (226) der zweiten Drehvorrichtung (22) verbunden ist, und
- der Fluidkanal (226) der zweiten Drehvorrichtung (22) mit dem Gehäusekanal (225) der zweiten Drehvorrichtung (22) verbunden ist, wobei
die gebildete Fluidleitung sich durch die erste und zweite Drehvorrichtung (21, 22) erstreckt, und
- in der zweiten Drehvorrichtung (22) das Gehäuse (223) so angeordnet ist, dass es sich in Bezug auf den Innenverteiler (224) der zweiten Drehvorrichtung (22) um ihre axiale Mittelachse (220) dreht.

3. Dreheinrichtung nach Anspruch 2, wobei die Einrichtung eine dritte Drehvorrichtung (23) umfasst, wobei
- die dritte Drehvorrichtung (23) mit der zweiten Drehvorrichtung (22) so verbunden ist, dass die axiale Mittelachse (230) der dritten Drehvorrichtung (23) senkrecht zur axialen Mittelachse (220) der zweiten Drehvorrichtung (22) steht, wobei
- der Gehäusekanal (225) der zweiten Drehvorrichtung (22) mit dem Gehäusekanal (235) der dritten Drehvorrichtung (23) verbunden ist, und
- der Gehäusekanal (235) der dritten Drehvorrichtung (23) mit dem Fluidkanal (236) der dritten Drehvorrichtung (23) verbunden ist, wobei
die gebildete Fluidleitung sich durch die erste, zweite und dritte Dreheinheit (21, 22, 23) erstreckt, und
- in der dritten Drehvorrichtung (23) der Innenverteiler (234) der dritten Drehvorrichtung (23) so angeordnet ist, dass er sich in Bezug auf das Gehäuse (233) um ihre axiale Mittelachse (230) dreht.

4. Dreheinrichtung nach einem der vorstehenden Ansprüche, wobei der Gehäusekanal (215, 225, 235) mindestens einen ringförmigen Ring (218) umfasst, der an einer Innenfläche des Gehäuses (213, 223, 233) vorgesehen ist.

5. Dreheinrichtung nach einem der vorstehenden Ansprüche, wobei der Gehäusekanal (215, 225, 235) einen axialen Abschnitt umfasst, der sich axial innerhalb der Gehäusestruktur (213, 223, 233) erstreckt.

6. Dreheinrichtung nach einem der vorstehenden Ansprüche, wobei der Fluidkanal (216, 226, 236) einen axialen Abschnitt umfasst, der sich axial innerhalb des Innenverteilers (214, 224, 234) erstreckt.

7. Dreheinrichtung nach einem der Ansprüche 4 bis 6, wobei der Fluidkanal (216, 226, 236) einen Fluidkanalauslass umfasst, der mit dem ringförmigen Ring (218) des Gehäusekanals (215, 225, 235) verbunden ist.

8. Dreheinrichtung nach einem der vorstehenden Ansprüche, wobei die Einrichtung eine Vielzahl von Fluidleitungen umfasst, die durch eine Vielzahl von miteinander verbundenen Gehäusekanälen (215, 225, 235) und Fluidkanälen (216, 226, 236) gebildet werden.

9. Dreheinrichtung nach einem der vorstehenden Ansprüche, wobei der Raum (212, 222, 232) Antriebseinheiten umschließt.

10. Dreheinrichtung nach einem der vorstehenden Ansprüche, wobei jede Drehvorrichtung (21, 22, 23) so angeordnet ist, dass sie sich 180° um ihre axiale Mittelachse (210, 220, 230) dreht.

11. Bergbaufahrzeug, das eine Dreheinrichtung nach einem der vorstehenden Ansprüche umfasst.

## Revendications

1. Appareil de rotation pour une flèche (1) d'un véhicule minier, l'appareil comprenant un dispositif de rotation (21) présentant un axe central axial (210),
**caractérisé en ce que**
le dispositif de rotation (21) comprend
- un logement (213),
- un collecteur interne (214) présentant une structure en forme de tube avec un espace (212) en son sein, dans lequel le collecteur interne (214) est agencé de manière concentrique à l'intérieur du logement (213), dans lequel
- le logement (213) est agencé pour tourner autour de l'axe central axial (210),
- le logement (213) comprend un canal de logement (215),
- le collecteur intérieur (214) comprend un canal de fluide (216) présentant une entrée de fluide (217) pour recevoir du fluide à partir de la flèche, et
- le canal de fluide (216) est relié au canal de logement (215) pour former un conduit de fluide à travers le dispositif de rotation, et
l'appareil de rotation comprend en outre des câbles électriques (240) acheminés à travers le dispositif de rotation (21), selon lequel les câbles électriques (240) sont acheminés à travers le dispositif de rotation (21) au niveau de l'axe central axial (210).

2. Appareil de rotation selon la revendication 1, dans lequel l'appareil comprend deux dispositifs de rotation, un premier dispositif de rotation (21) et le deuxième dispositif de rotation (22), dans lequel
- le deuxième dispositif de rotation (22) est relié au premier dispositif de rotation (21) de sorte que l'axe central axial du deuxième dispositif de rotation (220) est perpendiculaire à l'axe central axial (210) du premier dispositif de rotation (21),
- le canal de logement (215) du premier dispositif de rotation (21) est relié au canal de fluide (226) du deuxième dispositif de rotation (22), et
- le canal de fluide (226) du deuxième dispositif de rotation (22) est relié au canal de logement (225) du deuxième dispositif de rotation (22), selon lequel
le conduit de fluide formé s'étend à travers les premier et deuxième dispositifs de rotation (21, 22), et
- dans le deuxième dispositif de rotation (22), le logement (223) est agencé pour tourner par rapport au collecteur interne (224) du deuxième dispositif de rotation (22) autour de son axe central axial (220).

3. Appareil de rotation selon la revendication 2, dans lequel l'appareil comprend un troisième dispositif de rotation (23), dans lequel
- le troisième dispositif de rotation (23) est relié au deuxième dispositif de rotation (22) de sorte que l'axe central axial (230) du troisième dispositif de rotation (23) est perpendiculaire à l'axe central axial (220) du deuxième dispositif de rotation (22), dans lequel
- le canal de logement (225) du deuxième dispositif de rotation (22) est relié au canal de logement (235) du troisième dispositif de rotation (23), et
- le canal de logement (235) du troisième dispositif de rotation (23) est relié au canal de fluide (236) du troisième dispositif de rotation (23), selon lequel
le conduit de fluide formé s'étend à travers les première, deuxième et troisième unités de rotation (21, 22, 23), et
- dans le troisième dispositif de rotation (23), le collecteur interne (234) du troisième dispositif de rotation (23) est agencé pour tourner par rapport au logement (233) autour de son axe central axial (230).

4. Appareil de rotation selon l'une quelconque des revendications précédentes, dans lequel le canal de logement (215, 225, 235) comprend au moins une bague annulaire (218) prévue au niveau d'une surface intérieure du logement (213, 223, 233).

5. Appareil de rotation selon l'une quelconque des revendications précédentes, dans lequel le canal de logement (215, 225, 235) comprend une section axiale s'étendant axialement à l'intérieur de la structure de logement (213, 223, 233).

6. Appareil de rotation selon l'une quelconque des revendications précédentes, dans lequel le canal de fluide (216, 226, 236) comprend une section axiale s'étendant axialement à l'intérieur du collecteur interne (214, 224, 234).

7. Appareil de rotation selon l'une quelconque des revendications 4 à 6, dans lequel le canal de fluide (216, 226, 236) comprend une sortie de canal de fluide reliée à la bague annulaire (218) du canal de logement (215, 225, 235).

8. Appareil de rotation selon l'une quelconque des revendications précédentes, dans lequel l'appareil comprend une pluralité de conduits de fluide formés par une pluralité de canaux de logement (215, 225, 235) et de canaux de fluide (216, 226, 236) reliés les uns aux autres.

9. Appareil de rotation selon l'une quelconque des revendications précédentes, dans lequel l'espace (212, 222, 232) renferme des unités d'entraînement.

10. Appareil de rotation selon l'une quelconque des revendications précédentes, dans lequel chaque dispositif de rotation (21, 22, 23) est agencé pour tourner sur 180° autour de son axe central axial (210, 220, 230).

11. Véhicule minier comprenant un appareil de rotation selon l'une quelconque des revendications précédentes.
